# EUROPÄISCHE PATENTSCHRIFT

(11) **EP 1 899 655 B1**
(45) Veröffentlichungstag und Bekanntmachung des Hinweises auf die Patenterteilung: **31.12.2014**
(21) Anmeldenummer: 06761772.0
(22) Anmeldetag: 06.07.2006
(51) Int. Cl.: F24D 13/02

(54) **FLÄCHENHEIZUNGSSYSTEM FÜR FUSSBODENPANEELE**
SURFACE HEATING SYSTEM FOR FLOOR BOARDS
SYSTEME DE CHAUFFAGE DE SURFACE POUR DES PANNEAUX DE SOL

(30) Priorität: 06.07.2005 DE 202005010712 U
(43) Veröffentlichungstag der Anmeldung: 19.03.2008
(73) Patentinhaber: Akzenta Paneele + Profile GmbH, 56759 Kaisersesch (DE)
(72) Erfinder: MERZ, Kurt, 56412 Welschneudorf (DE)
(74) Vertreter: Lippert, Stachow & Partner
(86) Internationale Anmeldenummer: PCT/DE2006/001170
(87) Internationale Veröffentlichungsnummer: WO 2007/003180

(56) Entgegenhaltungen:
- US-A- 2 521 540
- US-A- 5 235 741
- US-A1- 2001 010 138

## Beschreibung

Die Erfindung betrifft ein elektrisch betriebenes Flächenheizungssystem, insbesondere ein Flächenheizungssystem, das in Verbindung mit Fußbodenpaneelen verwendet werden kann. Außerdem betrifft die Erfindung ein Verbindungselement und eine Dämmplatte zur Verwendung in einem erfindungsgemäßen Flächenheizungssystem.

Auf dem Gebiet sind beispielsweise Laminatpaneele bekannt, welche auf ihrer Unterseite ein Dämmmaterial zur Trittschalldämmung und eine Heizfolie zur Beheizung des zusammengelegten Fußbodens aufweisen. Die Paneele mit integrierter Heizfunktion sind rechteckförmig ausgebildet, wobei an den Stirnseiten jeweils zwei Stecker vorhanden sind, mit welchen eine Paneele elektrisch an die stirnseitig benachbarte Paneele angeschlossen wird. Die Paneele weisen an ihren Stirn- bzw. Längsseiten mechanische Schnapp- bzw. Rastverbindungselemente auf, sodass der Bodenbelag leimlos verlegbar ist. Dadurch, dass die elektrische Verbindung der Paneele untereinander an den Stirnseiten durch Zusammenstecken der Steckverbinder erfolgt, ergeben sich bestimmte Sachzwänge im Hinblick auf die mechanischen Verbindungselemente der Paneele. Vorliegend werden die elektrischen Verbinder benachbarter Paneele zusammengefügt und nachfolgend die mechanische Verbindung an den Stirnseiten der vorher elektrisch verbundenen Paneele eingestellt. Damit ergibt sich fast zwangsläufig, dass die Paneele mechanisch an der Stirnseite durch ein relatives Verschieben der Paneele entlang ihrer Längskante stirnseitig mit ihrer jeweils benachbarten Paneele gekoppelt werden. Insofern sind die Möglichkeiten des mechanischen Verbindens der Paneele mit Heizfunktion aufgrund der gleichzeitig notwendigen elektrischen Kopplung im Stand der Technik beschränkt.

In der deutschen Gebrauchsmusterschrift DE 202 18 331 U1 ist ein beheiztes Bodenpaneel offenbart, bei welchem eine elektrische Widerstands-Heizfolie auf die Unterlage der Paneele aufkaschiert ist. Die elektrische Kontaktierung benachbarter Paneele kann entweder an ihren Stirnseiten oder an ihren Längsseiten erfolgen. Zur elektrischen Verbindung benachbarter Paneele weisen diese elektrisch wirksame Taschen bzw. Steckteile auf, welche nach dem elektrischen Buchse-Stecker-Prinzip arbeiten.

Ferner ist eine Heizungsanordnung bekannt, wie sie in der deutschen Offenlegungsschrift DE 198 49 432 A1 beschrieben ist. Diese weist eine Flächenheizung mit einer Beschichtung zur Erzeugung elektromagnetischer Wellen auf, wobei mittels eines Oberwellengenerators ein Schwingungsspektrum im Bereich von monopolaren Eigenfrequenzen erzeugt werden soll. Einzelne Heizelemente werden als Flächenheizelemente verwendet und elektrisch miteinander verschaltet an den Oberwellengenerator angeschlossen.

Ein gattungsgemäßes Flächenheizungssystem schlägt die US 2001/0010138 A1 vor. Dabei umfasst eine Bodenplatte eine Bambusplatte sowie eine Dämmplatte. Um zwei Bodenplatten elektrisch zu verbinden sind die Leiterstreifen so vorgesehen, dass sie über ein einsteckbares Verbindungselement kontaktiert werden können.

Der Erfindung liegt die Aufgabe zugrunde, ein Flächenheizungssystem bereitzustellen, das flexibel einsetzbar ist, eine niedrige Bauhöhe aufweist, einfach zu installieren ist und insbesondere bei der Verwendung für leimlose Fußbodenlaminatpaneele die möglichen mechanischen Verbindungen zwischen den Paneelen weniger beschränkt, als dies bei bekannten Systemen der Fall ist.

Diese Aufgabe wird auf überraschend einfache Weise schon mit einem Flächenheizungssystem gemäß Anspruch 1 gelöst. Weitere vorteilhafte Gegenstände sind in den abhängigen Ansprüchen angegeben.

Dabei weist das erfindungsgemäße Flächenheizungssystem mehrere, nebeneinander anzuordnende und elektrische zu verschaltende Dämmplatten mit Heizfunktion auf, die insbesondere zur Verwendung als Unterlage für Paneele wie Fußbodenlaminatpaneele verwendbar sind. Dabei sind Dämmplatte und Paneele im Unterschied zum oben beschriebenen Stand der Technik nicht miteinander verbunden, sondern voneinander getrennt. Ferner umfasst das System Verbindungselemente zum elektrischen Verbinden von zwei benachbart angeordneten Dämmplatten sowie eine Stromversorgung, mit welcher der notwendige Heizstrom bereitgestellt wird. Eine Dämmplatte des Systems weist zumindest eine Lage aus dämmfähigen Material auf, an welcher eine als Widerstandsheizung ausgebildete Heizfolieneinrichtung angebracht ist, entlang zweier Kanten jeweils ein Leiterstreifen verläuft, derart, dass die beiden Leiterstreifen zueinander beabstandet sind. Die Verbindungselemente weisen zumindest zwei beabstandete und elektrisch verbundene Kontaktierklebeabschnitte auf, wobei jeweils ein Kontaktierklebeabschnitt elektrisch mit einer Leiterfolie einer Dämmplatte verbindbar ist. Beide Leiterstreifen können entlang der Längskante oder entlang der Schmalkante der Dämmplatte verlaufen, wenn diese rechteckförmig ist. Es liegt im Rahmen der Erfindung auch mehr als zwei Leiterstreifen mit dazwischen angeordnetem leitfähigem Material an der Dämmplatte vorzusehen, letztlich erhöht sich dadurch jedoch der Herstellungsaufwand. Dabei sind im verlegten Zustand die Leiterstreifen an einer Dämmplatte entweder mit dem Betriebspotential oder mit einem Bezugspotential verbunden, insofern müssen über die Verbindungselemente auch bei einer solchen Ausführungsform nur zwei elektrische Potentiale von einer Dammplatte an eine benachbarte weitergeführt werden.

Insbesondere bei der Verwendung des erfindungsgemäßen Flächenheizungssystems als Unterlage für Fußbodenpaneele wird die mechanische Kopplung zwischen den Paneelen bzw. das Verlegeverfahren der Paneele nicht beschränkt. Beispielsweise ist es nun auch möglich, einen Paneelfußboden zu beheizen, bei welchem benachbarten Paneele an den Stirnseiten durch Einschieben entlang der Stirnkanten verbunden werden, was bei den bekannten Heizungsanordnungen des Standes der Technik nicht möglich ist. Ferner kann durch das Vorsehen von zu klebenden elektrischen Verbindungselementen der konstruktive Aufwand bei der elektrischen Kopplung benachbarter Heizungselemente verringert werden. Da auch die Verbindungselemente aufgrund ihrer konstruktiven Gestaltung genauso wie die Heizfolie selbst eine geringe Bauhöhe aufweisen, kann die gesamte Flächenheizung sehr dünn ausgeführt werden.

Vorteilhafte Ausführungsformen sind in den Unteransprüchen angegeben.

Um großflächig an einer Dämmplatte eine Heizungsfunktion bereitzustellen, kann vorgesehen sein, dass zwischen den Leiterstreifen ein leitfähiges Material mit einem spezifischen Widerstand angeordnet ist, der größer als der Flächenwiderstand der Leiterfolie ist. Hierdurch wird ferner erreicht, dass eine gleichmäßige Heizspannung über die gesamte Erstreckung der Heizeinrichtung vorliegt und insofern eine homogene Wärmeerzeugung über im Wesentlichen gesamte Erstreckung der Heizeinrichtung realisiert ist. Der Heizstrom fließt dabei zwischen den beiden Leiterstreifen einer Dämmplatte. Insofern fällt dann die Heizspannung zwischen den beiden Leiterstreifen der jeweiligen Dämmplatte ab, während das elektrische Potential auf einem Streifen einer Platte im Wesentlichen konstant ist. Dabei kann das leitfähige Material mit einem spezifischen Widerstand größer als der des Leiterstreifens beispielsweise ein Graphit, eine Kohlefaser oder auch ein anderes geeignetes leitfähiges Material umfassen. Ferner sind auch Verbundmaterialien einsetzbar. Besonders vorteilhaft ist es, wenn das leitfähige Material mit einem Siebdruckverfahren auf eine geeignete Unterlage aufbringbar ist.

Es kann zweckmäßig sein, wenn das Verbindungselement einen Träger mit darauf aufgebrachter Leiterfolie umfasst, sodass das Verbindungselement eine besonders gute Leitfähigkeit bereitstellt und nur einen vernachlässigbaren Spannungsabfall bei der Stromführung in den Leiterstreifen.

Um Kurzschlüsse zu vermeiden, kann vorgesehen sein, dass die Leiterfolie und/oder das leitfähige Material mit höherem spezifischen Flächenwiderstand im Vergleich zu den Leiterstreifen mit einer isolierenden Deckschicht, insbesondere einer isolierenden Kunststoffschicht überzogen sind. Dabei ist die Kunststoffschicht zur Bereitstellung einer Kontaktstelle im Bereich eines Randes der Dämmplatte, beispielsweise einer Stirnseite, entfernt ist, so dass die Leiterfolie freigelegt ist. Dieser freigelegte Bereich kann dann zur Kontaktierung mit einem Verbindungselement benutzt werden.

Die verwendeten Leiterstreifen an der Dämmplatte können aus verschiedenen, gut leitenden Materialien bestehen, beispielsweise können sie Metall oder einen leitfähigen Kunststoff umfassen. Gleiches gilt auch für die Leitfolie des Verbindungselementes, wobei das Verbindungselement selbst in einer besonders vorteilhaften Ausführungsform aus einem leitfähigen und flexiblen Kunststoff bestehen kann, sodass die Notwendigkeit einer Gestaltung eines Verbundmaterials entfällt.

Es kann zweckmäßig sein, wenn das Verbindungselement im angegebenen Kontaktierklebeabschnitt einen inneren Abschnitt mit einem elektrisch leitfähigen Kleber umfasst, welcher in der Hauptebene des Verbindungselements vollständig von einem wasserdichten Kleber eingeschlossen ist. Insofern dient der im inneren Bereich angegebene elektrisch leitfähige Kleber zur Kontaktierung mit einem frei zugänglichen Teil einer Leiterfolie der Heizfolieneinrichtung einer Dämmplatte und der diesen umgebende Bereich, in welchem sich der wasserdichte Kleber befindet zur Abschottung des inneren Bereichs gegen Feuchtigkeit. Besonders zweckmäßig ist es, wenn die beiden Kleber vorkonfektioniert an den jeweiligen Bereichen eines Verbindungselementes angebracht sind, wobei diese Bereiche mit einer Schutzfolie gegen Umwelteinflüsse geschützt sind. Somit muss der Anwender diese Schutzfolie nur entfernen und dann das Verbindungselement mit dem entsprechenden frei liegenden Leiterstreifenabschnitt der Heizfolieneinrichtung in Kontakt bringen, um sowohl elektrisch als mechanisch eine Verbindung zwischen der Heizfolieneinrichtung und dem Verbindungselement zu erreichen, wobei die elektrische Verbindung feuchtigkeitsgeschützt ist und die mechanische Verbindung der Dämmplatten i.d.R. eine untergeordnete Rolle spielt.

Als Material für die Dämmplatten, auf welche die Heizfolieneinrichtung aufgebracht, beispielsweise aufkaschiert sein kann, kann je nach Ausführungsform beispielsweise eine Holzfaser, Gummi und/oder Schaumstoff verwendet werden. Auch andere Dämmmaterialien sind möglich, soweit sie die erforderliche Dämmfunktion, insbesondere eine Schalldämmung wie eine Trittschalldämmung bereitstellen können.

Vorteilhafterweise umfasst das erfindungsgemäße Flächenheizungssystem einen Temperatursensor, welcher die Temperatur der Heizfolieneinrichtung bzw. benachbarter Bereiche wie im Dämmmaterial erfasst. Besonders zweckmäßig ist es, wenn der Temperatursensor an der Heizfolie angeordnet ist, sodass die Temperatur am Ort der Wärmeerzeugung erfassbar ist. Dabei kann es zweckmäßig sein, wenn das System eine Temperatursteuereinrichtung aufweist, welche im Ansprechen auf einen Ist-Soll-Temperaturvergleich die Stromversorgung steuert. Dabei kann die Ist-Temperatur eine Raumtemperatur und die Soll-Temperatur eine gewünschte Raumtemperatur sein. Um einen Hitzestau zu vermeiden kann gleichzeitig die Temperatur in der Heizfolie und/oder im Dämmmaterial bzw. - im Falle eines Fußbodens - die Temperatur der Fußbodenpaneele überwacht werden.

Das erfindungsgemäße Flächenheizungssystem kann sowohl mit einer Wechselspannung, insbesondere mit einer netzbezogenen 50Hz-Wechselspannung als auch mit einer Gleichspannung betrieben werden. Diese Betriebsspannung ist dabei die Spannung, welche zwischen den beiden Leiterstreifen einer Platte angelegt ist. Dabei kann beispielsweise die Stromversorgungseinrichtung eine netzbetriebene, steuerbare Gleichspannungsquelle sein, die von der Temperatursteuerung entsprechend angesteuert wird. Die Stromversorgungseinrichtung kann dabei eine Transformatoreinrichtung, sowie eine Gleichrichtereinrichtung mit u.U. einem Glättungskondensator zur Bereitstellung der Betriebsgleichspannung aufweisen.

Eine sehr gleichmäßige Wärmeabgabe über die gesamte Dämmplatte wird erreicht, wenn das leitfähige Material mit einem spezifischen Widerstand größer, insbesondere mehr als 5 mal größer als der Flächenwiderstand der Leiterfolie homogen zwischen den Leiterstreifen verteilt ist. Je nach elektrischen Gegebenheiten, insbesondere in Abhängigkeit des spezifischen Widerstandes des leitfähigen Materials kann es auch zweckmäßig sein, wenn das leitfähige Material zwischen den Leiterstreifen einer Dämmplatte streifenförmig angeordnet ist, sodass zwischen den Leiterstreifen beabstandete Streifen dieses Materials vorliegen. In der Regel werden diese Streifen sich senkrecht zu den Leiterstreifen erstrecken.

Das erfindungsgemäße Flächenheizungssystem kann insbesondere sowohl für den Bodenbereich als auch für den Wandbereich von Räumen in Gebäuden verwendet werden. Die Kontaktierung der einzelnen Platten untereinander und einer Platte mit der Stromversorgungseinrichtung hängt von den jeweiligen elektrischen Gegebenheiten ab. Beispielsweise kann es sein, dass eine gewisse Anzahl von Platten elektrisch in Reihe geschaltet sind, bevor die Verbindung mit der Stromversorgung erfolgt. Weitere in Reihe geschaltete Platten können dann bei dem erfindungsgemäßen Flächenheizungssystem zu der erstgenannten Reihenschaltung parallel an die Stromversorgung angeschlossen werden.

Die wesentlichen Teile des erfindungsgemäßen Flächenheizungssystems sind demnach die grundsätzlich beliebig zueinander, zu einer Heizfläche anzuordnenden Dämmplatten sowie die Verbindungselemente zum elektrischen Kontaktieren dieser Platten untereinander bzw. mit elektrischen Verbindungseinrichtungen der Versorgungseinrichtung. Darüber hinaus müssen diese Teile mittels Verbindungseinrichtungen an eine Stromversorgung angeschlossen werden, wobei eine Steuereinrichtung umfasst sein kann, welche in Abhängigkeit einer oder mehrerer Temperaturerfassungen den Heizstrom bzw. die Heizspannung steuert.

Bei entsprechender Gestaltung der Heizfolieneinrichtung sowie Gestaltung und/oder Betrieb der Stromversorgung ist es auch möglich, das erfindungsgemäße Flächenheizungssystem zum Kühlen zu verwenden. Insofern ist die Folieneinrichtung dann als Kühlfolieneinrichtung ausgestaltet. Ein derartiges Flächenkühlsystem wird vorzugsweise an zumindest einer Wand eines Raums angebracht, d.h. die Platten mit darauf angebrachter Kühlfolieneinrichtung werden an einer Wand befestigt.

Die Erfindung wird im Folgenden durch das Beschreiben einiger Ausführungsformen und weitere vorteilhafter Merkmale unter Bezugnahme auf die beiliegenden Zeichnungen beschrieben, wobei
- Fig. 1a: eine Dämmplatte des erfindungsgemäßen Flächenheizungssystems,
- Fig. 1b: die in Fig. 1a dargestellte Dämmplatte in einer Detailansicht,
- Fig. 2: zwei mittels eines elektrischen Verbindungselements verbundene Dämmplatten,
- Fig. 3a: das in Fig. 2 dargestellte Verbindungselement in einer Seitenansicht und
- Fig. 3b: das in Fig. 2 gezeigte Verbindungselement in einer Aufsicht
zeigt.

Im Nachfolgenden wird die Erfindung unter Bezug auf ein erfindungsgemäß gestaltetes Flächenheizungssystem beschrieben, das als Unterlage für einen herkömmlichen leimfrei zu verlegenden Laminatfußboden verwendbar ist. Dabei können die Laminatpaneele im Hinblick auf ihre Verbindungselemente beliebig gestaltet sein, da diese auf das erfindungsgemäße Flächenheizungssystem aufgelegt werden. Das im Folgenden beschriebene Flächenheizungssystem eignet sich natürlich auch zur Verwendung mit einem Vollholzboden oder einen Kunststoff-Bodenbelag.

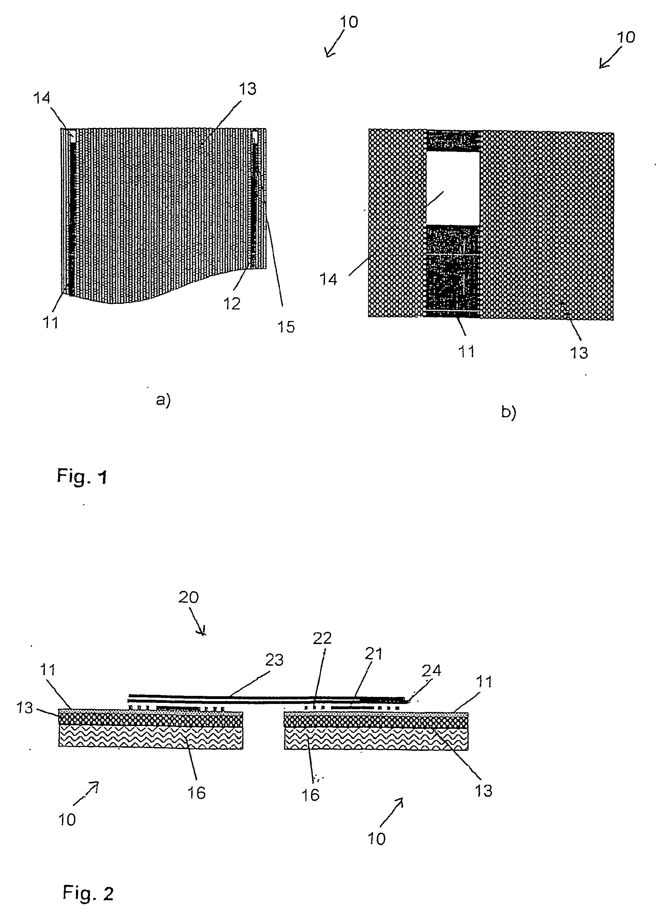

Die im beschriebenen System umfassten Dämmplatten sind rechteckförmig aufgebaut und weisen eine Länge zwischen 1,0 und 1,2 m bei einer Breite zwischen 30 und 80 cm auf. Die Figuren 1a, b zeigen eine Aufsicht auf eine solche Dämmplatte auf diejenige Seite, auf welcher eine Heizfolie aufkaschiert ist. Von der Dämmplatte 10 sind die beiden beabstandeten und jeweils am Rand einer Längskante zueinander parallel verlaufenden Leiterstreifen 11, 12 dargestellt, die hier als Kupferfolien ausgebildet sind. Diese Leiterstreifen sind auf einer dünnen Schicht eines Graphitverbundes 13 aufgebracht und elektrisch und mechanisch mit dem homogenen Graphitverbund verbunden. In der Zeichnung nicht angegeben ist eine transparente isolierende Abdeckschicht aus einem Kunststoff, welche zum Schutz des Graphitverbundes 13 und den Kupferfolien bzw. zur Vermeidung eines Kurzschlusses zwischen den beiden Leiterstreifen auf die in der Figur sichtbaren Fläche der Dämmplatte aufgebracht ist. Im Bereich der beiden Stirnkanten, von welchen in den Figuren 1a, b nur eine dargestellt ist, ist der Kunststoffüberzug über einen Abschnitt der Kupferstreifen entfernt, derart, dass ein rechteckförmiger Bereich jeweils freigelegt ist, der zum Kontaktieren verwendet werden kann. In einer weiteren, nicht dargestellten Ausführungsform kann der freigelegte Bereich auch anders konturiert sein, beispielsweise oval oder kreisförmig. In den Figuren 1a, b ist dieser freiliegende Bereich der Kupferfolie zur Klarstellung weiß dargestellt und mit dem Bezugszeichen 14 bzw. 15 versehen.

In einer anderen, nicht dargestellten Ausführungsform sind die Leiterstreifen aus einem leitfähigen Material gestaltet, das Kohlefasern umfasst.
Fig. 2 zeigt die Dämmplatte 10 in einer Seitenansicht, wobei der obere Kunststoffüberzug auf der Heizfolie nicht dargestellt ist. Die Dämmplatte umfasst eine Lage Dämmmaterial 16, vorliegend eine Holzfaser, auf welcher die als Folie hergestellte Heizeinrichtung aufgeklebt ist. Letztere umfasst als wesentliche Bestandteile den Graphitverbund 13 mit den beiden beabstandeten Folien 11, 12, von denen in Fig. 2 die Kupferfolie 11 dargestellt ist. Die Heizfolie weist nicht nur auf der in Fig. 1 dargestellten Seite, sondern auch auf der gegenüberliegenden Unterseite einen Kunststoffüberzug auf, sodass letztlich die besagte Heizfolie entsteht, welche auf das Dämmmaterial 16 aufkaschiert ist. Fig. 2 zeigt nun zwei solcher Dämmplatten in einer Seitenansicht, welche im Bezug auf ihre Stirnseiten gegenüberliegen. Durch ein elektrisches Verbindungselement 20 werden nun die sich gegenüberliegenden Kupferfolien elektrisch miteinander verbunden. Hierzu weist das Verbindungselement 20 an seinen beiden Längsenden jeweils einen Kontaktbereich auf, der zur Kontaktierung in Übereinstimmung mit dem jeweiligen freigelegten Bereichen 14 bzw. 15 der Kupferfolien auf der Dämmplatte gebracht und damit verklebt wird.

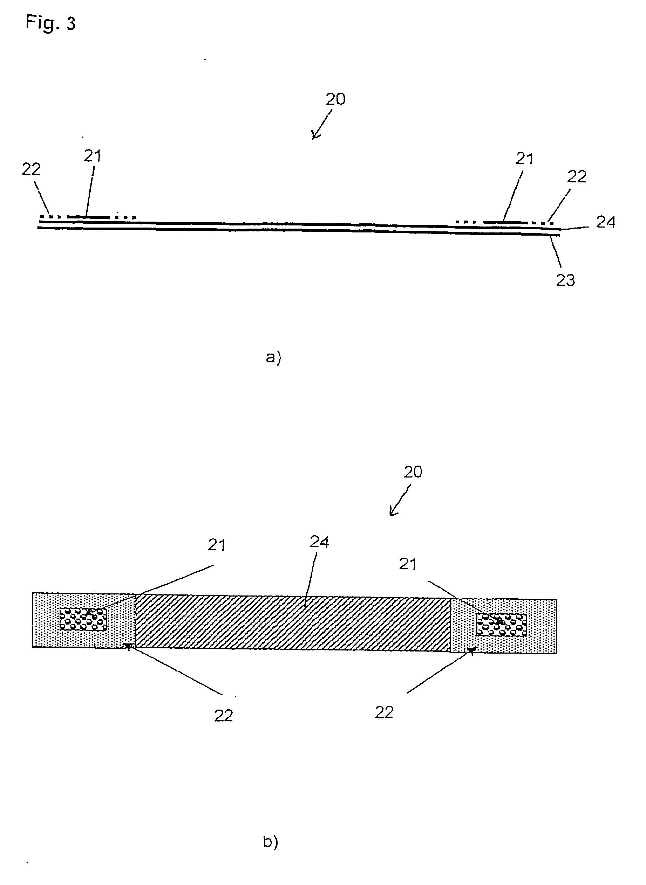

Die Figuren 3a, b zeigen den Aufbau des elektrischen Verbindungselementes für das beschriebene erfindungsgemäße Flächenheizungssystem in einer Seitenansicht, siehe Fig. 3a bzw. in einer Aufsicht, siehe Fig. 3b. Das Verbindungselement 20 ist bandförmig aufgebaut und weist einen flexiblen Träger aus einem Kunststoff 23 auf, auf den eine Metallfolie 24 aufkaschiert ist. An den Längsenden des Verbindungselements 20 ist eine innere Fläche 21 der Metallfolie vorgesehen, die mit einem leitfähigen Kleber 21 bestrichen ist. Diese Fläche mit Leitkleber 21 wird vollständig von einer Fläche der Metallfolie eingeschlossen, auf die ein wasserfester Kleber 22 aufgebracht ist. Die Länge des Verbindungselementes und die Anordnung der Bereiche mit Leitkleber ist an den Verlegungsabstand zwischen zwei Dämmplatten angepasst, derartig, dass der Bereich mit dem Leitkleber 21 in Kontakt mit dem freigelegten Bereich 14 bzw. 15 der Kupferfolie auf der Dämmplatte 10 kommt, wenn zwei derartige Dämmplatten nebeneinander gelegt sind und das Verbindungselement wie in Fig. 2 gezeigt, jeweils mit einem Ende auf eine der beiden Dämmplatten angelegt und aufgepresst ist, sodass die gewünschte Leitkleberkontaktierung zwischen den zugeordneten Kupferfolien 11 der beiden an ihren Stirnseiten gegenüberliegenden Dämmplatten entsteht, siehe Fig. 2.

Die Größe der Dämmplatten kann an die verwendeten Fußbodenlaminatpaneelen angepasst sein, es ist jedoch vorteilhaft, wenn die Dämmplatten versetzt zu den Bodenpaneelen angeordnet sind um zu vermeiden, dass die elektrischen Verbindungselemente 20 im Bereich der mechanischen Verbindungen der Paneele liegen, da ansonsten die mechanischen Belastungen insbesondere senkrecht zur Plattenebene an den Verbindungselementen unnötig hoch sind. Um einen schnelle Wärmeübertragung auf die Paneele bereitzustellen ist vorgesehen, dass die Dämmplatten mit der Dämmaterial 16 auf dem Untergrund und die Paneele direkt auf der Heizungseinrichtung aufliegen. Auf diese Weise wird auch die Justage der Verbindungselemente auf den Dämmplatten, d.h. auf der Heizfolie vereinfacht.

Die Stromversorgung stellt in dem beschriebenen Beispiel eine netzbetriebene Gleichspannung bereit, wobei die elektrische Verschaltung derartig ist, dass jeweils eines der beiden Potentiale an einem der Leiterstreifen 11, 12 anliegt, sodass ein Strom zwischen den beiden Leiterstreifen bzw. Kupferfolienstreifen 11, 12 fließt. Die elektrische Verschaltung bzw. Kontaktierung der Dämmplatten mit Heizfunktion kann leicht an die speziellen Gegebenheiten angepasst werden. Je nach Größe des zu beheizenden Raums bzw. Raumbereichs kann beispielsweise eine einzelne Reihe von an ihren Stirnseiten aneinander liegenden Dämmplatten durch die oben beschriebene Kontaktierung elektrisch in Reihe geschaltet und dann mit der Stromversorgung verbunden werden, sodass alle Reihen parallel an der Stromversorgung anliegen. Darüber hinaus ist es jedoch auch möglich, dass alle Dämmplatten mehrerer Reihen seriell hintereinander geschaltet sind.

In einer nicht dargestellten Ausführungsform ist ein Temperatursensor an oder in dem Graphitverbund angeordnet, sodass direkt die Momentantemperatur der Heizung erfasst werden kann, wodurch beispielsweise eine Überhitzung des erfindungsgemäßen Flächenheizungssystems durch eine entsprechende Steuerung der Stromversorgung vermieden werden kann. Darüber hinaus kann zusätzlich durch die Erfassung einer Ist-Temperatur eines zu beheizenden Raumes und einer Eingabe einer Soll-Temperatur durch eine entsprechende Steuereinrichtung die gewünschte Temperatur automatisch eingestellt werden.

### Bezugzeichenliste

- 10: Dämmplatte
- 11, 12: Leiterstreifen, Kupferfolie
- 13: Graphitverbund
- 14, 15: Freilegung der Leiterfolie
- 16: Dämmmaterial
- 17: Heizfolie
- 18: Kunststoffüberzug
- 20: Verbindungselement
- 21: Leitkleber
- 22: Wasserfester Kleber
- 23: Träger
- 24: Leiterstreifen, Kupferfolie

## Patentansprüche

1. Flächenheizungssystem mit mehreren, nebeneinander angeord-neten und elektrisch verschalteten Dämmplatten (10) mit Heizfunktion, insbesondere zur Verwendung als Unterlage für Paneele wie Fußbodenlaminatpaneele, und mit Verbindungselementen (20) zum elektrischen Verbinden von zwei benachbart angeordneten Dämmplatten (10), sowie einer Stromversorgung, wobei
- eine Dämmplatte zumindest eine Lage (16) aus dämmfähigem Material aufweist, **dadurch gekennzeichnet, dass**
auf dem dämmfähigen Material eine als Widerstandsheizung ausgebildete Heizfolieneinrichtung (17) angebracht ist, entlang deren Längskanten zueinander beabstandet zwei Leiterstreifen (11, 12) verlaufen, dass- ein Verbindungselement (20) zwei beabstandete und elektrisch verbundene Kontaktierklebeabschnitte (21) aufweist, und dass jeweils ein Kontaktierklebeabschnitt elektrisch mit einem Leiterstreifen einer Dämmplatte verbunden ist.

2. System nach Anspruch 1, **dadurch gekennzeichnet, dass** zwischen den Leiterstreifen (11, 12) eines Verbindungselementes (20) ein leitfähiges Material mit einem spezifischen Flächenwiderstand angeordnet ist, der größer als der Flächenwiderstand der Leiterstreifen (11, 12) ist.

3. System nach Anspruch 1 oder 2, **dadurch gekennzeichnet, dass** das Verbindungselement (20) jeweils einen Träger (23) mit einem daran angebrachten Leiterstreifen (24) umfasst.

4. System nach Anspruch 1, 2 oder 3, **dadurch gekennzeichnet, dass** die Leiterstreifen (11, 12) der Dämmplatte jeweils mit einer isolierenden Kunststoffschicht überzogen sind welche zur Festlegung einer Kontaktstelle im Bereich (14, 15) der Stirnseiten der Dämmplatte entfernt ist, derart, dass der Leiterstreifen freigelegt ist.

5. System nach einem der Ansprüche 1 bis 4, **dadurch gekennzeichnet, dass** die Leiterstreifen (11, 12) der Dämmplatte (10) Metall oder leitfähigen Kunststoff umfassen.

6. System nach einem der Ansprüche 1 bis 5, **dadurch gekennzeichnet, dass** der Leiterstreifen (24) des Verbindungselementes (20) Metall oder leitfähigen Kunststoff umfasst.

7. System nach einem der Ansprüche 1 bis 6, **dadurch gekennzeichnet, dass** ein Verbindungselement (20) im Klebeabschnitt einen inneren Abschnitt mit einem elektrisch leitfähigen Kleber (21) umfasst, welcher in der Hauptebene des Verbindungselementes vollständig von einem wasserdichten Kleber (22) eingeschlossen ist.

8. System nach einem der Ansprüche 1 bis 7, **dadurch gekennzeichnet, dass** das Dämmmaterial (16) Holzfaser, Gummi und/oder Schaumstoff umfasst.

9. System nach einem der Ansprüche 1 bis 8, **dadurch gekennzeichnet, dass** ein Temperatursensor in der Heizungsfolie angeordnet ist.

10. System nach einem der Ansprüche 1 bis 9, **dadurch gekennzeichnet, dass** die Stromversorgungseinrichtung eine netzbetriebene, steuerbare Gleichspannungsquelle ist.

11. System nach einem der Ansprüche 1 bis 9, **dadurch gekennzeichnet, dass** die Stromversorgungseinrichtung einen 50 Hz- Wechselstrom ausgibt.

12. System nach einem der Ansprüche 1 bis 11, **dadurch gekennzeichnet, dass** das leitfähige Material (13) zwischen den Leiterstreifen (11, 12) einer Dämmplatte gleichmäßig verteilt ist.

13. System nach einem der Ansprüche 1 bis 11, **dadurch gekennzeichnet, dass** das leitfähige Material zwischen den Leiterstreifen (11, 12) einer Dämmplatte (10) streifenförmig angeordnet ist, derart, dass zwischen den Leiterstreifen und zu diesen senkrecht verlaufende und beabstandete Streifen vorgegebener Breite angeordnet sind.

14. System nach einem der Ansprüche 1 bis 13, **dadurch gekennzeichnet, dass** das Material des Trägers (23) des Verbindungselementes (20) flexibel ist.

15. System nach einem der Ansprüche 1 bis 14, **dadurch gekennzeichnet, dass** das Verbindungselement (20) einen leitfähigen und flexiblen Kunststoff umfasst.

16. System nach einem der Ansprüche 1 bis 15, **dadurch gekennzeichnet, dass** das System eine Temperatursteuereinrichtung aufweist, welche im Ansprechen auf einen Ist-Soll-Temperaturvergleich die Stromversorgung steuert.

17. System nach einem der Ansprüche 1 bis 16, **dadurch gekennzeichnet, dass** der Träger (23) und die Leiterfolie (24) des Verbindungselementes integral als leitfähiges Kunststoffband ausgebildet sind.

18. Verbindungselement zur Verwendung in einem Flächenheizungssystem nach Anspruch 1, umfassend einen Leiterstreifen (24), **dadurch gekennzeichnet, dass** der Leiterstreifen (24) an einem Träger (23) angebracht ist, dass zwei beabstandete elektrisch verbundene Kontaktierklebeabschnitte (21) vorgesehen sind, wobei die Kontaktierklebeabschnitte (21) mit einer isolierenden Kunststoffschicht versehen sind und Bereiche aufweisen, die von der isolierenden Kunststoffschicht freigelegt sind zwecks Zusammenwirken mit Leiterstreifen (11, 12) umfassenden Dämmplatten (10), deren Leiterstreifen mit einer isolierenden Deckschicht überzogen sind, welche im Bereich eines Randes der Dämmmplatte entfernt ist, wobei mittels der Kontaktierklebeabschnitte (21) des Verbindungselements (20) und dafür vorgesehenen Bereichen der Leiterstreifen (11, 12) der Dämmplatten (10) eine elektrische Kontaktierung herstellbar ist.

19. Dämmplatte mit Heizfunktion zur Verwendung in einem Flächenheizungssystem nach Anspruch 1, wobei die Dämmplatte (10) zumindest eine Lage (16) aus dämmfähigem Material aufweist, auf welche eine als Widerstandsheizung ausgebildete Heizfolieneinrichtung (24) angebracht ist, entlang deren Längskanten zueinander beabstandet zwei Leiterstreifen (11, 12) verlaufen, **dadurch gekennzeichnet, dass** die Leiterstreifen (11, 12) der Dämmplatte (10) mit einer isolierenden Kunststoffschicht überzogen sind, wobei die isolierende Kunststoffschicht zur Festlegung einer Kontaktstelle (14, 15) im Bereich der Stirnseiten der Dämmplatte entfernt ist, derart, dass jeweils die Leiterstreifen freigelegt sind.

## Claims

1. A surface heating system comprising a plurality of mutually juxtaposed electrically interconnected insulating panels (10) having a heating function, in particular for use as a base for panels like laminate floor panels, and having connecting elements (20) for electrically connecting two adjacently arranged insulating panels (10), as well as a power supply, wherein
- an insulating panel has at least one layer (16) of insulating material, **characterised in that**
disposed on the insulating material is a heating film device (17) which is in the form of resistance heating means and along the longitudinal edges of which extend two conductor strips (11, 12) in mutually spaced relationship, a connecting element (20) has two spaced and electrically connected contacting adhesive portions (21) and a respective contacting adhesive portion is electrically connected to a conductor strip of an insulating panel.

2. A system according to claim 1 **characterised in that** arranged between the conductor strips (11, 12) of a connecting element (20) is a conductive material having a specific sheet resistance greater than the sheet resistance of the conductor strips (11, 12).

3. A system according to claim 1 or claim 2 **characterised in that** the connecting element (20) respectively includes a carrier (23) with a conductor strip (24) disposed thereon.

4. A system according to claim 1, claim 2 or claim 3 **characterised in that** the conductor strips (11, 12) of the insulating panel are respectively covered with an insulating plastic layer which is removed to establish a contact location in the region (14, 15) of the ends of the insulating panel in such a way that the conductor strip is exposed.

5. A system according to one of claims 1 to 4 **characterised in that** the conductor strips (11, 12) of the insulating panel (10) include metal or conductive plastic.

6. A system according to one of claims 1 to 5 **characterised in that** the conductor strip (24) of the connecting element (20) includes metal or conductive plastic.

7. A system according to one of claims 1 to 6 **characterised in that** a connecting element (20) in the adhesive portion includes an inner portion with an electrically conductive adhesive (21) which is completely enclosed by a water-tight adhesive (22) in the main plane of the connecting element.

8. A system according to one of claims 1 to 7 **characterised in that** the insulating material (16) includes wood fibre, rubber and/or foam.

9. A system according to one of claims 1 to 8 **characterised in that** a temperature sensor is arranged in the heating film.

10. A system according to one of claims 1 to 9 **characterised in that** the power supply device is a mains-operated controllable dc voltage source.

11. A system according to one of claims 1 to 9 **characterised in that** the power supply device outputs a 50 Hz alternating current.

12. A system according to one of claims 1 to 11 **characterised in that** the conductive material (13) is uniformly distributed between the conductor strips (11, 12) of an insulating panel.

13. A system according to one of claims 1 to 11 **characterised in that** the conductive material is arranged in strip form between the conductor strip (11, 12) of an insulating panel (10) in such a way that arranged between the conductor strips and extending perpendicularly thereto are spaced strips of predetermined width.

14. A system according to one of claims 1 to 13 **characterised in that** the material of the carrier (23) of the connecting element (20) is flexible.

15. A system according to one of claims 1 to 14 **characterised in that** the connecting element (20) includes a conductive and flexible plastic.

16. A system according to one of claims 1 to 15 **characterised in that** the system has a temperature control device which controls the power supply in response to an actual-target temperature comparison.

17. A system according to one of claims 1 to 16 **characterised in that** the carrier (23) and the conductor film (24) of the connecting element are integral in the form of conductive plastic band.

18. A connecting element for use in a surface heating system according to claim 1 including a conductor strip (24), **characterised in that** the conductor strip (24) is mounted to a carrier (23), that there are provided two spaced electrically connected contacting adhesive portions (21), wherein the contacting adhesive portions (21) are provided with an insulating plastic layer and have regions which are exposed from the insulating plastic layer for the purposes of cooperation with insulating panels (10) which include conductor strips (11, 12) and whose conductor strips are covered with an insulating cover layer which is removed in the region of an edge of the insulating panel, wherein an electric contacting can be made by means of the contacting adhesive portions (21) of the connecting element (20) and regions provided for same of the conductor strips (11, 12) of the insulating panels (10).

19. An insulating panel having a heating function for use in a surface heating system according to claim 1 wherein the insulating panel (10) has at least one layer (16) of insulating material and on which is disposed a heating film device (24) in the form of resistance heating and along the longitudinal edges of which extend two conductor strips (11, 12) in mutually spaced relationship, **characterised in that** the conductor strips (11, 12) of the insulating panel (10) are covered with an insulating plastic layer, wherein the insulating plastic layer is removed to establish a contact location (14, 15) in the region of the ends of the insulating panel in such a way that the respective conductor strips are exposed.

## Revendications

1. Système de chauffage de surface avec plusieurs plaques isolantes (10) disposées les unes à côté des autres et câblées électriquement, avec fonction de chauffage, en particulier pour utilisation en tant que base pour des panneaux, comme des panneaux de sols en aggloméré, et avec des éléments de liaison (20) pour relier électriquement deux plaques isolantes (10) disposées contiguës, ainsi, qu'une alimentation électrique, une plaque isolante présentant au moins une couche (16) en matériau isolant, **caractérisé en ce qu'**il est placé, sur le matériau isolant, un dispositif de film chauffant (17) conçu en tant que chauffage par résistance, le long de ses bords longitudinaux s'étendant deux bandes conductrices (11, 12) espacées l'une de l'autre, **en ce qu'**un élément de liaison (20) présente deux sections adhésives de contact (21) espacées et reliées électriquement, et **en ce qu'**à chaque fois, une section adhésive de contact est reliée électriquement à une bande conductrice d'une plaque isolante.

2. Système selon la revendication 1, **caractérisé en ce qu'**il est disposé entre les bandes conductrices (11, 12) d'un élément de liaison (20) un matériau conducteur avec une résistance de surface spécifique qui est supérieure à la résistance de surface des bandes conductrices (11, 12).

3. Système selon la revendication 1 ou 2, **caractérisé en ce que** l'élément de liaison (20) comprend à chaque fois un support (23) avec une bande conductrice (24) appliquée dessus.

4. Système selon la revendication 1, 2 ou 3, **caractérisé en ce que** les bandes conductrices (11, 12) de la plaque isolante sont respectivement couvertes avec une couche de matière plastique isolante, laquelle est enlevée pour fixation d'un emplacement de contact (14, 15) dans la zone des côtés frontaux de la plaque isolante, de sorte que la bande conductrice est dégagée.

5. Système selon l'une des revendications 1 à 4, **caractérisé en ce que** les bandes conductrices (11, 12) de la plaque isolante (10) comprennent du métal ou de la matière plastique conductrice.

6. Système selon l'une des revendications 1 à 5, **caractérisé en ce que** la bande conductrice (24) de l'élément de liaison (20) comprend du métal ou de la matière plastique conductrice.

7. Système selon l'une des revendications 1 à 6, **caractérisé en ce qu'**un élément de liaison (20) comprend, dans la section adhésive, une section intérieure avec un adhésif (21) électro-conducteur lequel est complètement entouré, dans le niveau principal de l'élément de liaison, par un adhésif (22) étanche à l'eau.

8. Système selon l'une des revendications 1 à 7, **caractérisé en ce que** le matériau isolant (16) comprend des fibres de bois, du caoutchouc et/ou de la mousse.

9. Système selon l'une des revendications 1 à 8, **caractérisé en ce qu'**un capteur de température est disposé dans le film chauffant.

10. Système selon l'une des revendications 1 à 9, **caractérisé en ce que** le dispositif d'alimentation électrique est une source de tension en courant continu, pouvant être commandée, alimentée par le secteur.

11. Système selon l'une des revendications 1 à 9, **caractérisé en ce que** le dispositif d'alimentation électrique délivre un courant alternatif de 50 Hz.

12. Système selon l'une des revendications 1 à 11, **caractérisé en ce que** le matériau conducteur (13) est réparti uniformément entre les bandes conductrices (11, 12) d'une plaque isolante.

13. Système selon l'une des revendications 1 à 11, **caractérisé en ce que** le matériau conducteur (13) est disposé en forme de bande entre les bandes conductrices (11, 12) d'une plaque isolante (10) de sorte que sont disposées des bandes, espacées, placées entre les bandes conductrices et perpendiculaires à celles-ci, de largeur prédéterminée.

14. Système selon l'une des revendications 1 à 13, **caractérisé en ce que** le matériau du support (23) de l'élément de liaison (20) est flexible.

15. Système selon l'une des revendications 1 à 14, **caractérisé en ce que** l'élément de liaison (20) comprend une matière plastique souple et conductrice.

16. Système selon l'une des revendications 1 à 15, **caractérisé en ce que** le système présente un dispositif de commande de température, lequel commande l'alimentation électrique en réponse à une comparaison de température théorique - réelle.

17. Système selon l'une des revendications 1 à 16, **caractérisé en ce que** le support (23) et le film conducteur (24) de l'élément de liaison sont conçus intégralement en tant que bande de matière plastique conductrice.

18. Elément de liaison pour utilisation dans un système de chauffage de surface selon la revendication 1, comprenant une bande conductrice (24), **caractérisé en ce que** la bande conductrice (24) est appliquée au niveau d'un support (23), **en ce que** sont prévues deux sections adhésives de contact (21) espacées et reliées électriquement, les sections adhésives de contact (21) étant munies d'une couche de matière plastique isolante et présentant des zones qui sont dégagées de la couche de matière plastique isolante pour coopérer avec des plaques isolantes (10) comprenant des bandes conductrices (11, 12), dont les bandes conductrices sont couvertes d'une couche de recouvrement isolante, laquelle est enlevée dans la zone d'un bord de la plaque isolante, une mise en contact électrique pouvant être créée à l'aide des sections adhésives de contact (21) de l'élément de liaison (20) et des zones prévues à cet effet des bandes conductrices (11, 12) des plaques isolantes (10).

19. Plaque isolante avec fonction de chauffage, pour utilisation dans un système de chauffage de surface selon la revendication 1, la plaque isolante (10) présentant au moins une couche (16) en matériau isolant, sur laquelle est placé un dispositif de film chauffant (24) conçu en tant que chauffage par résistance, le long de ses bords longitudinaux s'étendant deux bandes conductrices (11, 12) espacées l'une de l'autre, **caractérisée en ce que** les bandes conductrices (11, 12) de la plaque isolante (10) sont couvertes avec une couche de matière plastique isolante, la couche de matière plastique isolante étant enlevée pour fixation d'un emplacement de contact (14, 15) dans la zone des côtés frontaux de la plaque isolante, de sorte qu'à chaque fois, les bandes conductrices sont dégagées.
